# EUROPÄISCHE PATENTSCHRIFT

(11) **EP 1 642 758 B1**
(45) Veröffentlichungstag und Bekanntmachung des Hinweises auf die Patenterteilung: **02.04.2008**
(21) Anmeldenummer: 05020756.2
(22) Anmeldetag: 23.09.2005
(51) Int. Cl.: B60J 7/185, B60J 7/22

(54) **Verschlussvorrichtung für ein Cabriolet-Verdeck**
Locking mechanism for a cabriolet top
Mécanisme de verrouillage pour capote de cabriolet

(30) Priorität: 02.10.2004 DE 102004048122
(43) Veröffentlichungstag der Anmeldung: 05.04.2006
(73) Patentinhaber: Wilhelm Karmann GmbH, 49084 Osnabrück (DE)
(72) Erfinder: Bunsmann, Winfried, 49143 Bissendorf (DE)

(56) Entgegenhaltungen:
- EP-A2- 0 863 033
- EP-A2- 1 112 881
- DE-A1- 3 725 431

## Beschreibung

Die Erfindung bezieht sich auf ein Cabrioletfahrzeug mit einem zu öffnenden Dach. Insbesondere bezieht sich die Erfindung auf eine Verschlussvorrichtung, mit der das bezüglich des Fahrzeugs zwischen einer offenen und einer geschlossenen Position bewegliche Cabriolet-Verdeck in der geschlossenen Position verriegelbar ist und zum Öffnen freigegeben werden kann.

Das Verriegeln von Dachsystemen, insbesondere Cabriolet-Verdecken, mittels Verschlüssen der Eingangs genannten Art ist bekannt. Beispielsweise beschreibt die EP 0 863 033 A2 eine Verschlussvorrichtung für ein Cabriolet-Verdeck, die ein zentrales Verschlusselement und/oder mehrere, den Seitenbereichen des Karosserierahmenteils und des Cabriolet-Verdecks zugeordnete Verschlusselemente umfasst. Diese Verschlusselemente weisen jeweils ein Widerlager und ein mit diesem Widerlager in Schließstellung des Cabriolet-Verdecks in Eingriffstellung stehendes Riegelorgan auf. Das Widerlager ist als parallel zur Fahrzeuglängsachse verlaufender, von einer drehbaren Hülse umgriffener Rundsteg ausgebildet, der von dem Riegelorgan in der Schließstellung umgriffen wird. Das Riegelorgan ist um eine in Fahrzeuglängsrichtung verlaufende Schwenkachse schwenkbar.

Bei einem in der DE 037 25 431 A1 beschriebenen Verschlusselement ist ein Strangpressprofil, das den Windschutzscheibenrahmen bildet, an der Innenseite entlang der oberen, rückwärtigen Kante einer Windschutzscheibe angeordnet und mit dieser über ein Klebeelement verbunden. In diesem Windschutzscheibenrahmen ist eine Aufnahme in Form einer Öffnung vorgesehen, in die in der Schließstellung des Verdecks ein verdeckseitig gelagertes Verschlussglied eingreift und das Verdeck gegen den Aufbau spannt. Das Verschlussglied ist als hakenartiges Bauteil ausgeführt.

Es ist eine Aufgabe der vorliegenden Erfindung, eine Verschlussvorrichtung für ein zwischen einer offenen und einer geschlossenen Position bewegbares Cabriolet-Verdeck derart weiterzuentwickeln, dass Bauraum, insbesondere in Fahrzeuglängsrichtung, eingespart werden kann und die aerodynamischen Eigenschaften des Fahrzeugs, insbesondere für Insassen im Fahrgastraum verbessert werden können.

Diese Aufgabe wird mit einer Verschlussvorrichtung mit den Merkmalen des Anspruchs 1 gelöst. Bevorzugte Ausgestaltungen sind in den abhängigen Ansprüchen angegeben.

Der Erfindung liegt der Gedanke zu Grunde, eine Verschlussvorrichtung vorzusehen, die ein Verschlusselement und ein entsprechendes Eingriffselement aufweist, welche in der geschlossenen Position des Cabriolet-Verdecks, d. h. bei geschlossenem Fahrzeugdach, miteinander in Eingriff sind. Eines der beiden Bauteile ist dabei am Cabriolet-Verdeck angebracht. Das andere ist an einem bezüglich des Fahrzeugs ortsfesten Bauteil angebracht, z. B. an einem Windschutzscheibenrahmen oder an der Windschutzscheibe selbst. Dabei ist das Verschlusselement derart gestaltet, dass es aufklappbar oder aufspreizbar ist, d. h. dass es zumindest zwei Bereiche aufweist, die derart zueinander relativ beweglich sind, dass sie sich voneinander weg- und aufeinander zu bewegen können. Beispielsweise kann das Aufspreizen durch ein Aufklappen um eine Schwenkachse oder durch ein paralleles Verschieben der Bauteile zueinander in einer Richtung, die im Wesentlichen senkrecht zur Längserstreckungsrichtung der Bauteile verläuft, erzielt werden.

Insbesondere bei einem bereits in sich gespannten Dachsystem bietet die Verschlussvorrichtung die Möglichkeit, eine verhältnismäßig einfache Bewegung des Verschlusselements, nämlich eine sich hebende und absenkende Bewegung, durchzuführen und das Eingriffselement lediglich zwischen den Bauteilen oder Bereichen des Verschlusselements einzubringen oder einzulegen, um die Verriegelung zu erzielen. Das Eingriffselement muss keine Drehbewegung oder ähnliches ausführen, um in die Verriegelungsposition zu gelangen. Dadurch wird auch die Gefahr einer Verkeilung, etwa beim Vorliegen von verhältnismäßig großen Fertigungstoleranzen, gemindert. Ausserdem kann durch die in einen beweglichen und in einen starren Bereich geteilte Bauweise des Verschlusselements ein fahrzeugaussenseitiger Teil des Verschlusselements bei geöffnetem Fahrzeugdach als Strömungslenkelement dienen, z. B als Spoiler. Dazu kann der bewegliche Teil in der offenen Position des Fahrzeugdachs im Hinblick auf seine Position und Neigung zu den umliegenden Bauteilen, insbesondere der Windschutzscheibe, optimiert werden.

Nachfolgend wird die Erfindung beispielhaft an Hand der beigefügten Figuren beschrieben, in denen
Figur 1 eine Verschlussvorrichtung für ein Cabriolet-Verdeck in der geschlossenen Position des Cabriolet-Verdecks zeigt;
Figur 2 die Verschlussvorrichtung aus Figur 1 beim Öffnen des Cabriolet-Verdecks bzw. beim Schließen des Cabriolet-Verdecks zeigt; und
Figur 3 eine Modifikation der in Figuren 1 und 2 dargestellten Ausführungsform der Verschlussvorrichtung zeigt.

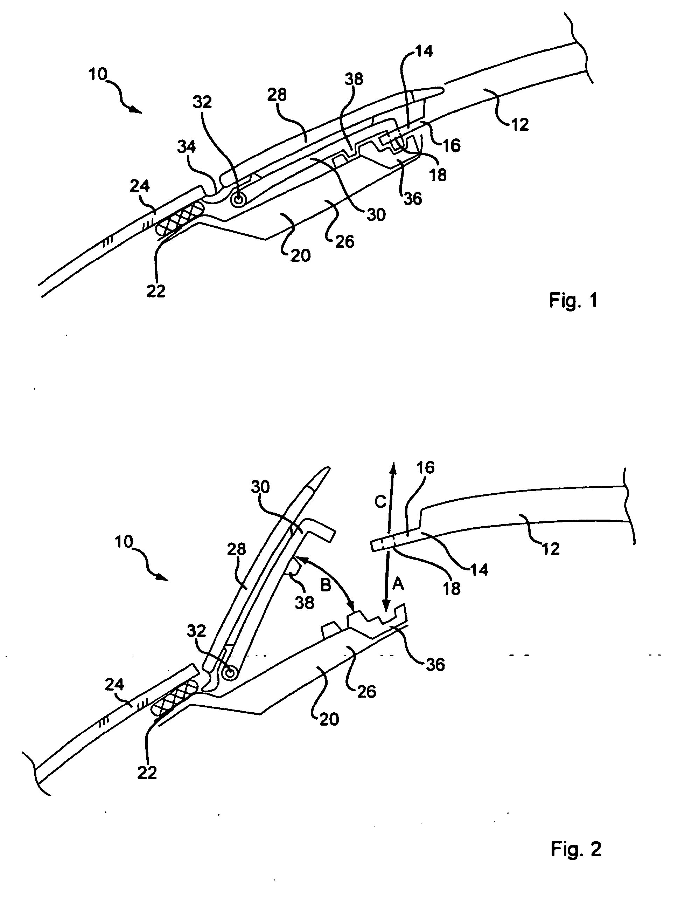

Die in Figur 1 dargestellte Verschlussvorrichtung 10 weist ein an einem in Fahrzeugvorwärtsfahrtrichtung vorderen Endbereich eines Cabriolet-Verdecks 12 angebrachtes Eingriffselement 14 auf. Das Eingriffselement besitzt einen vorderen abgeflachten Endbereich 16, der im Verhältnis zum sich nach hinten anschließenden Gestänge oder einem Querholm oder ähnlichem des Cabriolet-Verdecks 12 eine geringere Dicke besitzt und durch den eine Öffnung 18 als Durchgangsöffnung geformt ist.

Die Verschlussvorrichtung 10 weist ferner ein Verschlusselement 20 auf, das mittels eines Klebeelements 22, z. B. einer Kleberaupe, mit einer Front- oder Windschutzscheibe 24 eines Kraftfahrzeugs verbunden ist. Dabei bildet das Verschlusselement 20 einen Windschutzscheibenrahmen und ist am in Vorwärtsfahrtrichtung hinteren Endbereich der Frontscheibe 24 angeordnet und zwar derart, dass die Kleberaupe 22 unter der Frontscheibe 24 entlang im Wesentlichen der gesamten Breite der Frontscheibe 24 platziert ist und das Verschlusselement 20 mit der Unterseite der Kleberaupe 22 verklebt ist. Das Verschlusselement 20 erstreckt sich nach hinten in Richtung auf das Cabriolet-Verdeck 12. Grundsätzlich ist es möglich, das Eingriffselement 14 und das Verschlusselement 20 hinsichtlich ihrer Positionen zu vertauschen, d. h. dass sich das Eingriffselement 14 an die Frontscheibe 24 anschließt und z. B den Windschutzscheibenrahmen bildet, während sich das Verschlusselement 20 an das Cabriolet-Verdeck 12 anschließt.

Das Verschlusselement 20 ist in der dargestellten Ausführungsform als mehrteiliges Bauteil gestaltet, das insbesondere ein Innenverkleidungsteil 26, z. B. zur Aufnahme einer Sonnenblende, und eine Windschutzblende 28 aufweist, wobei die Windschutzblende 28 in der geschlossenen Position des Verschlusselements und des Cabriolet-Verdecks im Wesentlichen bündig mit der Außenseite der Frontscheibe 24 und der Außenseite des Cabriolet-Verdecks 12 ist. Statt einer mehrteiligen Ausführung des Verschlusselements durch das Innenverkleidungsteil 26 und die Windschutzblende 28 kann das Verschlusselement 20 beispielsweise ein baulich integriertes Bauteil sein, bei dem die zueinander relativ beweglichen Bereiche 26, 28 durch ein Filmscharnier verbunden sind.

Das Verschlusselement 20 weist ferner einen Verriegelungshaken 30 als Verriegelungselement auf, der um eine in der Nähe der Frontscheibe 24 liegende Achse 32, die im Wesentlichen senkrecht zu einer Fahrzeuglängsebene verläuft, schwenkbar ist. Bei einer Schwenkbewegung des Hakens 30 um die Achse 32 kann der Haken 30 die Windschutzblende 28 mitnehmen. Alternativ kann ein gesonderter Bewegungsmechanismus für den Verriegelungshaken 30 und die Windschutzblende 28 vorgesehen werden. Der Verriegelungshaken 30 greift an seinem der Achse 32 abgewendeten Ende in der in Figur 1 geschlossenen Position der Verschlussvorrichtung 10 in die Öffnung 18 ein, die am Eingriffselement 14 geformt ist. Er liegt somit in der geschlossenen Position der Verschlussvorrichtung 10 zwischen der Windschutzblende 28 und dem Innenverkleidungsteil 26.

Um ein Eindringen von Schmutz und Feuchtigkeit in den Bereich zwischen Innenverkleidungsteil 26 und Windschutzblende 28 und von dort gegebenenfalls weiter in die Fahrgastzelle zu verhindern, ist ferner als Verbindung zwischen der Windschutzblende 28 und der Frontscheibe 24, vorzugsweise auf der Unterseite, d. h. der dem Fahrzeuginnenraum zugewandten Seite, der Bauteile ein Dichtelement 34 angebracht.

Im Innenverkleidungsteil 26 ist an dem der Frontscheibe 24 in Fahrzeuglängsrichtung abgewandten Ende und gerichtet auf die Windschutzscheibe 28 ein Arretierbereich vorgesehen, der durch einen Einsatz 36 oder eine Formgebung gebildet wird, so dass der Verriegelungshaken 30 in Ausnehmungen im Einsatz 36 eingreifen kann und somit in seiner Lage fixiert wird. Vorzugsweise weist der Verriegelungshaken 30 neben dem Verriegelungsvorsprung, der durch die Öffnung 18 hindurch geführt wird und in eine entsprechende Ausnehmung am Einsatz 36 des Arretierbereichs des Innenverkleidungsteil 26 eingreift, zumindest einen weiteren Vorsprung 38 auf, der ebenfalls in eine Ausnehmung am Arretierbereich 36 des Innenverkleidungsteils 26 eingreifen kann. Dadurch wird die Lage des Verriegelungshakens 30 stabilisiert.

In den in Figuren 1 und 2 gezeigten Ausführungsformen übt der Verriegelungshaken 30 eine reine Arretierfunktion zwischen dem Eingriffselement 14 und dem Verschlusselement 20 auf. Das Cabriolet-Verdeck 12 ist bereits in sich gespannt. Wenn zusätzlich zur Verriegelungswirkung ein Spannen des Verdecks erzielt werden soll, muss der Arretierhaken 30 zusätzlich zu der sich hebenden und absenkenden Bewegung eine Bewegung ausführen, die im Wesentlichen in Fahrzeuglängsrichtung verläuft, um das Cabriolet-Verdeck 12 zu spannen. Im Bereich zwischen der Windschutzblende 28 und dem Innenverkleidungsteil 26 können dazu entsprechende Kinematiken vorgesehen werden.

Z. B. kann der Hakenbereich des Verriegelungshakens 30 eine Neigung derart aufweisen, dass er bei fortgesetzter Schließbewegung das Eingriffselement nach vorne zieht. Alternativ kann der Haken einen Bewegungsweg durchlaufen, der beim Schließen des Verdecks zunächst im Wesentlichen in Fahrzeuglängsrichtung und nachfolgend in vertikaler Richtung verläuft, um das Verdeck 12 nach vorne zu ziehen.

In der in Figur 1 dargestellten Ausführungsform wird zum Schließen des Cabriolet-Verdecks das Verdeck 12 mit dem abgeflachten Bereich 16, an dem die Öffnung 18 ausgebildet ist, über eine nicht dargestellte Kinematik auf den Arretierbereich 36 des Innenverkleidungsteils 26, der bezüglich der Frontscheibe 24 ortsfest ist, gelegt. Dies ist durch den Pfeil A in Figur 2 dargestellt. Nach dem Ablegen bzw. in der Endphase des Ablegens wird die Windschutzblende 28 durch eine Schwenkbewegung um die Achse 32 zugeklappt, d. h. auf dem Innenverkleidungsteil 26 in die geschlossenen Position abgelegt. Die Bewegung der Windschutzblende 28 ist durch den Pfeil B angedeutet. Somit wird das Eingriffselement 14 mit der Öffnung 18 auf dem Arretierbereich 36 und zwischen dem Innenverkleidungsteil 26 und der Windschutzblende 28 abgelegt. Bei der Schließbewegung der Windschutzblende 28 durchdringt der Verriegelungshaken 30 die Öffnung 18 und wird durch den Arretierbereich 36 in einer ortsfesten und lagefesten Position fixiert. Dadurch ist der Arretiervorgang beendet.

Ein Öffnungsvorgang findet in umgekehrter Richtung und Reihenfolge statt, wie es durch die Pfeile B und C in Figur 2 angedeutet ist.

In der offenen Stellung der Windschutzblende 28 dient diese als Spoiler, der eine Strömungslenkung für die das Fahrzeug während der Fahrt umströmende Luft vornimmt. Dadurch kann die Strömung um die Fahrgastzelle des Fahrzeugs, insbesondere bei offenem Cabriolet-Verdeck, optimiert werden, so dass Fahrzeuginsassen verhältnismäßig wenig Störung durch die Strömung empfinden. Die Länge des Spoilers, d. h. der Windschutzblende 28, kann nach Bedarf angepasst werden, ebenso wie deren Neigung zur Windschutzscheibe. Bevorzugt ist die Neigung der Windschutzblende 28 in der offenen Position des Verdecks frei justierbar.

Als Material des Verschlusselements und des Eingriffselements können beliebige Materialien verwendet werden, solange diese eine ausreichende Festigkeit aufweisen, um die bei geschlossenem Cabrioletdach zwischen Fahrzeugstruktur und Cabriolet-Verdeck auftretenden Kräfte aufzunehmen. Insbesondere für die Windschutzblende 28 wird es bevorzugt, ein transparentes oder zumindest teiltransparentes Material zu verwenden, gegebenenfalls kombiniert mit einem halbtransparenten Material für das Innenverkleidungsteil 26, wodurch die Durchsicht für den Fahrer und die Fahrzeuginsassen verbessert wird.

Zur Betätigung der Verschlussvorrichtung 10 ist, wenn eine mechanische Ausführungsform gewünscht wird, vorzugsweise im Innenverkleidungsteil 26 eine Öffnung vorgesehen, durch die ein (nicht dargestelltes) Betätigungselement hindurchgreift oder durch die der Fahrer oder Bediener zu einem zwischen Innenverkleidungsteil 26 und Windschutzblende 28 liegenden Betätigungselement greifen kann. Bei einem Drücken oder Drehen dieses Betätigungselements kann z. B. ein zwischen dem Innenverkleidungsteil 26 und der Windschutzblende 28 vorhandener Übertotpunktmechanismus aktiviert werden, welcher die Windschutzblende 28 in die geöffnete Position drückt bzw. in die geschlossene Position zieht. Die Öffnung des Cabriolet-Verdecks 12 kann unabhängig von dem Öffnen und Schließen der Verschlussvorrichtung durchgeführt werden, ebenfalls auf mechanische oder motorisch unterstützte Art, da bei einem geöffneten Verschlusselement 20 eine vollständig freie, unabhängige Bewegung des Cabriolet-Verdecks 12 möglich ist.

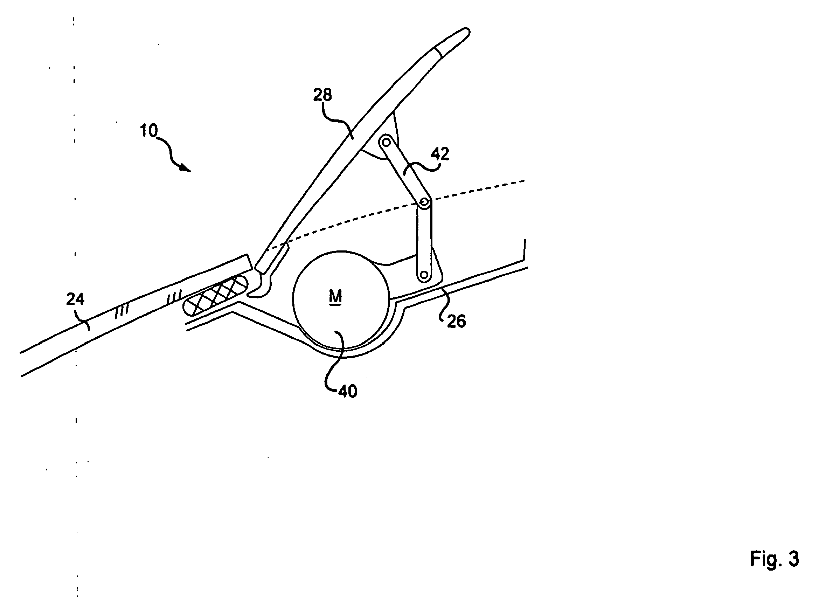

Als Alternative zu einer mechanischen Betätigung der Vorrichtung ist in Figur 3 eine motorisch angetriebene Verschlussvorrichtung 10 dargestellt. Dazu ist beispielsweise ein Elektromotor 40, der mit einem Kniehebelmechanismus 42 bzw. einem Übertotpunktmechanismus zusammenwirkt, im Raum zwischen der Windschutzblende 28 und dem Innenverkleidungsteil 26 aufgenommen. In der dargestellten Ausführungsform weist der Innenverkleidungsteil 26 dafür eine entsprechende Ausnehmung auf. Die verbleibenden Bauteile, die in Figur 3 teilweise nicht dargestellt sind, sind die gleichen und funktionsgleich wie bei der in Figuren 1 und 2 gezeigten Ausführungsform.

Das beschriebene Verschlusselement 10 kann an einer zentralen Position (in Fahrzeugquerrichtung) und/oder an einer oder mehreren vorzugsweise zu einer Fahrzeugmittelebene symmetrischen Position entlang der Vorderkante des Cabriolet-Verdecks 12 angebracht sein.

### Bezugszeichen

| | | | |
|---|---|---|---|
| 10 | Verschlussvorrichtung | 12 | Cabriolet-Verdeck |
| 14 | Eingriffselement | 16 | abgeflachter Bereich |
| 18 | Öffnung | 20 | Verschlusselement |
| 22 | Klebeelement | 24 | Frontscheibe |
| 26 | Innenverkleidungsteil | 28 | Windschutzblende |
| 30 | Verriegelungshaken | 32 | Achse |
| 34 | Dichtelement | 36 | Einsatz |
| 38 | Vorsprung | | |

## Patentansprüche

1. Verschlussvorrichtung (10) für ein zwischen einer offenen und einer geschlossenen Position bewegbares Cabriolet-Verdeck (12), enthaltend ein an einem fahrzeugfesten, an das Cabriolet-Verdeck (12) in der geschlossenen Position angrenzenden Bauteil (24) angebrachtes oder am Cabriolet-Verdeck (12) angebrachtes Verschlusselement (20) und ein am Cabriolet-Verdeck (12) oder dem fahrzeugfesten Bauteil (24) angebrachtes Eingriffselement (14), wobei das Verschlusselement (20) eine um eine etwa quer zur Fahrzeuglängsachse verlaufende Achse (32) schwenkbare Windschutzblende (28) mit einem Verriegelungselement (30) aufweist, wobei das Eingriffselement (14) mit dem Verriegelungselement (30) bei zumindest annähernd in die Schließstellung bewegtem Verdeck in Eingriff gelangt und dieses in der Schließstellung verriegelt.

2. Verschlussvorrichtung nach Anspruch 1, wobei das Verschlusselement (20) zumindest zwei zueinander derart relativ bewegliche Teile (26, 28) enthält, dass das Verschlusselement (20) aufspreizbar ist, und wobei das Eingriffselement (14) in der geschlossenen Position des Cabriolet-Verdecks (12) zumindest bereichsweise zwischen den zueinander beweglichen Teilen (26, 28) des Verschlusselements (20) aufgenommen ist.

3. Verschlussvorrichtung (10) nach Anspruch 2, **dadurch gekennzeichnet, dass** das Verschlusselement (20) ein oberes (28) und ein unteres (26) Klappenelement enthält.

4. Verschlussvorrichtung (10) nach Anspruch 3, **dadurch gekennzeichnet, dass** zumindest das obere Klappenelement (28) teiltransparent ist.

5. Verschlussvorrichtung (10) nach einem der vorhergehenden Ansprüche, **dadurch gekennzeichnet, dass** das fahrzeugfeste Bauteil ein Karosserierahmenteil, insbesondere ein Frontscheibenrahmen, oder die Frontscheibe (24) ist.

6. Verschlussvorrichtung (10) nach Anspruch 5 und 3 oder 4, **dadurch gekennzeichnet, dass** das untere Klappenelement (26) bezüglich des Karosserierahmenteils bzw. der Frontscheibe (24) oder des Cabriolet-Verdecks (12) ortsfest befestigbar ist.

7. Verschlussvorrichtung (10) nach Anspruch 6, **dadurch gekennzeichnet, dass** das obere Klappenelement (28) bezüglich des unteren Klappenelements (26) um eine Achse (32) aufschwenkbar ist, die im Wesentlichen senkrecht zu einer Fahrzeuglängsebene verläuft und in oder angrenzend an einen Befestigungsbereich des unteren Klappenelements an dem Karosserierahmenteil bzw. der Windschutzscheibe (24) verläuft.

8. Verschlussvorrichtung (10) nach einem der vorhergehenden Ansprüche, **dadurch gekennzeichnet, dass** das Eingriffselement (14) eine Öffnung (18) aufweist, durch die ein Hakenelement (30), das an einem beweglichen Teil des Verschlusselements (20) angebracht ist, passieren kann.

9. Verschlussvorrichtung (10) nach einem der vorhergehenden Ansprüche, **dadurch gekennzeichnet, dass** zwischen der Frontscheibe (24) des Fahrzeugs und dem Verschlusselement (20) ein Dichtelement (22) vorgesehen ist.

10. Verschlussvorrichtung (10) nach einem der vorhergehenden Ansprüche, weiter enthaltend eine motorisch betriebene Mechanik (40, 42), welche die Bewegung der Teile (26, 28) des Verschlusselements (20) antreibt.

11. Verschlussvorrichtung (10) nach Anspruch 10, **dadurch gekennzeichnet, dass** die Mechanik ein Übertotpunktgestänge (42) zur Führung der Bewegung der Teile (26, 28) des Verschlusselements enthält.

12. Verschlussvorrichtung nach einem der vorhergehenden Ansprüche, **dadurch gekennzeichnet, dass** die Windschutzblende (28) in der Schließstellung des Verdecks einen bündigen Übergang von der Frontscheibe (24) zum Verdeck (12) bildet.

13. Cabriolet-Verdeck mit einer Verschlussvorrichtung. (10) nach einem der vorhergehenden Ansprüche.

## Claims

1. Locking mechanism (10) for a cabriolet top (12), which is movable between an open position and a closed position, comprising a locking element (20), which is attached to the cabriolet top (12) or is attached to a vehicle-affixed component (24) that is adjacent to the cabriolet top (12) in the closed position, and an intervening element (14), which is attached to the cabriolet top (12) or to the vehicle-affixed component (24), wherein the locking mechanism (10) includes a windscreen visor (28) having a latching element (30), which visor is pivotable about an axis (32) extending approximately transverse to the vehicle longitudinal axis, wherein the intervening element (14) arrives in engagement with the latching element (30) at least when the top moves approximately into the closing position and this latches in the closed position.

2. Locking mechanism according to claim 1, wherein the locking element (20) comprises at least two parts (26, 28), which are movable relative to each other, such that the locking element (20) can be spread out, and wherein the intervening element (14) is accommodated at least in the area between the moved-together parts (26, 28) of the locking element (20) in the closed position of the cabriolet top (12).

3. Locking mechanism (10) according to claim 2, **characterized in that**, the locking element (20) comprises an upper (28) and a lower (26) flap element.

4. Locking mechanism (10) according to claim 3, **characterized in that**, at least the upper flap element (28) is partially transparent.

5. Locking mechanism (10) according to one of the preceding claims, **characterized in that**, the vehicle-affixed component is a vehicle body frame part, in particular a front windscreen frame, or the front windscreen (24).

6. Locking mechanism (10) according to claim 5 and 3 or 4, **characterized in that**, the lower flap element (26) is immovably fixable relative to the vehicle body frame part and/or the front windscreen (24) or relative to the cabriolet top (12).

7. Locking mechanism (10) according to claim 6, **characterized in that**, the upper flap element (28) is upwardly pivotable relative to the lower flap element (26) about an axis (32), which extends essentially perpendicular to a vehicle longitudinal plane and which extends in or adjacent to an attachment area of the lower flap element to the vehicle body frame part and/or the windscreen (24).

8. Locking mechanism (10) according to one of the preceding claims, **characterized in that**, the intervening element (14) includes an opening (18), through which a hook element (30), which is attached to a movable part of the locking element (20), can pass.

9. Locking mechanism (10) according to one of the preceding claims, **characterized in that**, a sealing element (22) is provided between the front windscreen (24) of the vehicle and the locking element (20).

10. Locking mechanism (10) according to one of the preceding claims, further comprising a motor-driven mechanism (40, 42) that drives the movement of the parts (26, 28) of the locking element (20).

11. Locking mechanism (10) according to claim 10, **characterized in that**, the mechanism comprises an upper dead point linkage (42) for guiding the movement of the parts (26, 28) of the locking element.

12. Locking mechanism according to one of the preceding claims, **characterized in that**, the windscreen visor (28) forms a flush junction of the front windscreen (24) to the top (12) in the closed position of the top.

13. Cabriolet top having a locking mechanism (10) according to one of the preceding claims.

## Revendications

1. Mécanisme de verrouillage (10) d'une capote de cabriolet (12) mobile entre une position d'ouverture et une position de fermeture, comportant un élément de verrouillage (20) prévu sur un composant (24) solidaire du véhicule, voisin de la capote (12) en position de fermeture ou prévu sur la capote (12) et un élément de prise (14) prévu sur la capote (12) ou sur le composant (24) solidaire du véhicule,
l'élément de verrouillage (20) ayant un déflecteur (28) pivotant autour d'un axe (32) dirigé sensiblement transversalement à la direction longitudinale du véhicule ayant un élément de blocage (30),
l'élément de prise (14) arrivant en prise avec l'élément de blocage (20) lorsque la capote est mise au moins sensiblement dans sa position de fermeture et verrouille cet élément en position de fermeture.

2. Dispositif de verrouillage selon la revendication 1, dont l'élément de verrouillage (20) comporte au moins deux pièces (26, 28) mobiles l'une par rapport à l'autre de façon que l'élément de verrouillage (20) puisse s'écarter et
en position ouverte de la capote (12), l'élément de prise (14) se loge au moins par zones entre les pièces mobiles (26, 28) de l'élément de verrouillage (20).

3. Dispositif de verrouillage (10) selon la revendication 2,
**caractérisé en ce que**
l'élément de verrouillage (12) comporte un élément de volet supérieur (28) et un élément de volet inférieur (26).

4. Dispositif de verrouillage (10) selon la revendication 3,
**caractérisé en ce qu'**
au moins l'élément de volet supérieur (28) est partiellement transparent.

5. Dispositif de verrouillage (10) selon l'une quelconque des revendications précédentes,
**caractérisé en ce que**
le composant solidaire du véhicule est une partie du châssis de la carrosserie, notamment le châssis du pare-brise ou le pare-brise (24).

6. Dispositif de verrouillage (10) selon les revendications 5 et 3 ou 4,
**caractérisé en ce que**
l'élément de volet (26) inférieur est fixé de manière solidaire par rapport à la partie de châssis de carrosserie ou le pare-brise (24) ou la capote (12).

7. Dispositif de verrouillage (10) selon la revendication 6,
**caractérisé en ce que**
l'élément de volet supérieur (28) peut pivoter dans le sens de l'ouverture autour d'un axe (32) par rapport à l'élément de volet inférieur (26), cet axe étant pratiquement perpendiculaire au plan longitudinal du véhicule et passe dans ou de façon voisine d'une zone de fixation de l'élément de volet inférieur sur la partie de châssis de carrosserie ou de pare-brise (24).

8. Dispositif de verrouillage (10) selon l'une des revendications précédentes,
**caractérisé en ce que**
l'élément de prise (14) comporte une ouverture (18) à travers laquelle peut passer un élément de crochet (30) prévu sur une partie mobile de l'élément de verrouillage (20).

9. Dispositif de verrouillage (10) selon l'une quelconque des revendications précédentes,
**caractérisé en ce qu'**
un joint (22) est prévu entre le pare-brise (24) du véhicule et l'élément de verrouillage (20).

10. Dispositif de verrouillage (10) selon l'une quelconque des revendications précédentes,
comportant en outre un mécanisme à moteur (40, 42) qui entraîne le mouvement des pièces (26, 28) de l'élément de verrouillage (20).

11. Dispositif de verrouillage (10) selon la revendication 10,
**caractérisé en ce que**
le mécanisme comporte une tringlerie à genouillère (42) pour guider le mouvement des pièces (26, 28) de l'élément de verrouillage.

12. Dispositif de verrouillage selon l'une quelconque des revendications précédentes,
**caractérisé en ce que**
le pare-brise (28) forme une jonction continue entre le pare-brise (26) et la capote (12) lorsque la capote est en position de fermeture.

13. Capote de cabriolet comportant un dispositif de verrouillage (10) selon l'une des revendications précédentes.
